(19)

Europäisches Patentamt

European Patent Office

Office européen des brevets

(11) **EP 4 371 807 A1**

(12) **EUROPEAN PATENT APPLICATION**

(43) Date of publication:
**22.05.2024 Bulletin 2024/21**

(21) Application number: **22214128.5**

(22) Date of filing: **16.12.2022**

(51) International Patent Classification (IPC):
**B60L 53/64** (2019.01)  **B60L 53/67** (2019.01)
**H02J 3/00** (2006.01)  **H02J 7/00** (2006.01)
**B60L 53/65** (2019.01)  H02J 3/14 (2006.01)
H02J 3/32 (2006.01)  G06Q 30/0601 (2023.01)
G06Q 50/06 (2024.01)

(52) Cooperative Patent Classification (CPC):
**H02J 3/008; B60L 53/64; B60L 53/67;**
**H02J 7/0013;** B60L 53/65; G06Q 30/0605;
G06Q 50/06; H02J 3/14; H02J 3/322;
H02J 7/007188; H02J 2310/48; H02J 2310/64

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **17.11.2022 US 202263426267 P**

(71) Applicant: **Hitachi Energy Ltd**
**8050 Zürich (CH)**

(72) Inventors:
- **GIUNTOLI, Marco**
  **64521 Groß-Gerau (DE)**
- **KNEZOVIC, Katarina**
  **8006 Zürich (CH)**
- **HILLIARD, Antony Foster**
  **Montréal, Québec H2E1W4 (CA)**

(74) Representative: **Vossius & Partner**
**Patentanwälte Rechtsanwälte mbB**
**Siebertstraße 3**
**81675 München (DE)**

(54) **OPTIMIZED CONTROL OF POWER DEPOTS USING MULTI-TENANT CHARGING SYSTEM-OF-SYSTEMS**

(57) Optimization of independently operated power infrastructure sites, such as electric vehicle (EV) depots, can result in sub-optimal operation across a plurality of power infrastructure sites. Disclosed embodiments aggregate a plurality of power infrastructure sites, which support flexible loads, into a virtual site model, representing a multi-tenant charging system-of-systems, that can be optimized as a single unit, across one or more criteria, to maximize utilization of infrastructure assets and provide robustness against uncertainties during operation of the power infrastructure sites, while minimizing energy costs. When applied to EV depots, embodiments can mitigate or reduce delays in the operation of EV fleets.

FIG. 1

## Description

## BACKGROUND

### Field of the Invention

The embodiments described herein are generally directed to energy management, and, more particularly, to optimized control of power depots and/or other power infrastructure sites using a multi-tenant charging system-of-systems.

### Description of the Related Art

Many fleets of commercial and public-transit vehicles are switching to electric vehicles (EVs). As a result, there has been an increase in the deployment of EV charging stations. An EV depot may comprise a distribution network comprising several EV charging stations, auxiliary loads, and distributed energy resources (DERs), such as energy storage (e.g., battery energy storage system (BESS)), renewable energy generation (e.g., solar power generator, wind power generator, geothermal power generator, hydroelectric power generator, fuel cell, etc.), and/or non-renewable energy generation (e.g., diesel generator). Each EV charging station comprises one or a plurality of chargers that are each configured to deliver electricity to a connected electric vehicle (e.g., bus, automobile, utility truck, transport truck, etc.).

The distribution network may be managed by an energy management system (EMS), which is generally configured to reduce the costs of electricity consumption. Conventional solutions for optimizing the charging of electric vehicles (e.g., to minimize the costs of electricity consumption while maintaining fleet schedules) are directed to a single fleet in a single EV depot. In many cases, these solutions resemble existing solutions for fuel depots. Charging control is not optimized over multiple fleets or over multiple EV depots, which may each be independently operated. In addition, because of the amount of time required to charge electric vehicles and limits on peak power demand, there is extensive uncertainty (e.g., weather, battery wear, etc.) with a high potential of disruptions, resulting in EV delays which can propagate to an entire EV fleet. Thus, conventional solutions can result in sub-optimal operation of the EV depot with under-utilization of resources.

For example, European Patent No. 2760696 describes a method for assigning electric vehicles to charging stations, U.S. Patent No. 10,946,763 describes a method for charging an electric vehicle of an EV fleet, and U.S. Patent Pub. No. 2021/0221247 describes optimization of distributed energy storage resources to aid electric system balancing, aid local network constraint management, and maximize performance. However, none of these references optimize control across a plurality of power depots and/or a plurality of EV fleets. Nor do these references address other problems in conventional solutions discovered by the inventors.

## SUMMARY

Accordingly, systems, methods, and non-transitory computer-readable media are disclosed to optimize control of power infrastructure sites, including power depots, using a multi-tenant charging system-of-systems. An objective of certain embodiments is to optimize operations across a plurality of power infrastructure sites. A further objective of certain embodiments, as applied to electric vehicles, is to optimize charging across a plurality of EV fleets. A further objective of certain embodiments is to optimize operations of power infrastructure sites across a plurality of criteria. A further objective of certain embodiments is to maximize utilization of infrastructure assets and provide robustness against disturbances and other uncertainties, while minimizing energy costs.

In an embodiment, a method comprises using at least one hardware processor to: aggregate models of a plurality of power infrastructure sites, which support flexible loads, into a virtual site model; generate an optimization model from the virtual site model, wherein the optimization model outputs a target value based on one or more variables and an input that comprises a schedule for the flexible loads in the plurality of power infrastructure sites; solve the optimization model to determine values for the one or more variables that optimize the target value; and initiate control of one or more physical components in the plurality of infrastructure sites based on the determined values for the one or more variables.

The plurality of power infrastructure sites may comprise depots, wherein the flexible loads comprise electric vehicles, and wherein the one or more physical components comprise one or more charging stations configured to electrically connect to the electric vehicles to one or both of charge the electric vehicles or discharge the electric vehicles. The determined values for the one or more variables may associate each of the electric vehicles with one or both of a time period or power flow rate for charging or discharging at one of the one or more charging stations in one of the plurality of power infrastructure sites.

The flexible loads may comprise electric vehicles from a plurality of different fleets. The method may further comprise receiving vehicle information for the electric vehicles from at least one external system via at least one network, wherein the input to the optimization model is derived from at least the vehicle information. The vehicle information may comprise one or more of planned schedules for the electric vehicles, routes of the electric vehicles, arrival times of the electric vehicles at the plurality of power infrastructure sites, or states of charge of the electric vehicles.

The target value may include at least an energy cost, wherein optimizing the target value comprises minimizing the target value.

Initiating control of one or more physical components in the plurality of infrastructure sites may comprise controlling setpoints of the one or more physical components according to the determined values for the one or more variables. The one or more physical components may comprise non-intermittent distributed energy resources.

Initiating control may comprise communicating with a control system for at least one of the plurality of power infrastructure sites via at least one network.

The optimization model may be stochastic. The optimization model may comprise at least one objective function and one or more constraints. The optimization model may comprise a plurality of objective functions. The flexible loads may comprise electric vehicles, wherein the one or more constraints restrict parameters associated with the electric vehicles. The at least one objective function may comprise one or both of mixed-integer programming or linear programming.

The method may further comprise using the at least one hardware processor to: determine an energy demand based on the determined values for the one or more variables and the schedule for flexible loads; request the energy demand from an electricity market interface via at least one network; and receive a service commitment for the energy demand from the electricity market interface via the at least one network. The method may further comprise receiving a price forecast from the electricity market forecast over the at least one network, wherein the target value is further based on the price forecast.

The method may further comprise using the at least one hardware processor to: receive service pricing for one or more services from an electricity market interface via at least one network, wherein the input comprises the service pricing for at least one of the one or more services; determine to purchase the at least one service; request a service commitment for the at least one service from the electricity market interface via the at least one network; and receive the service commitment for the at least one service from the electricity market interface via the at least one network.

It should be understood that any of the features in the methods above may be implemented individually or with any subset of the other features in any combination. Thus, to the extent that the appended claims would suggest particular dependencies between features, disclosed embodiments are not limited to these particular dependencies. Rather, any of the features described herein may be combined with any other feature described herein, or implemented without any one or more other features described herein, in any combination of features whatsoever. In addition, any of the methods, described above and elsewhere herein, may be embodied, individually or in any combination, in executable software modules of a processor-based system, such as a server, and/or in executable instructions stored in a non-transitory computer-readable medium.

## BRIEF DESCRIPTION OF THE DRAWINGS

The details of the present invention, both as to its structure and operation, may be gleaned in part by study of the accompanying drawings, in which like reference numerals refer to like parts, and in which:

FIG. 1 illustrates an example infrastructure, in which one or more of the processes described herein, may be implemented, according to an embodiment;
FIG. 2 illustrates an example processing system, by which one or more of the processes described herein, may be executed, according to an embodiment;
FIG. 3 illustrates an example distribution network of a power infrastructure site, according to an embodiment;
FIG. 4 illustrates example data flows between various components of an optimization infrastructure, according to an embodiment; and
FIG. 5 illustrates an example process for optimized control of power infrastructure sites using a multi-tenant charging system-of-systems, according to an embodiment.

## DETAILED DESCRIPTION

In an embodiment, systems, methods, and non-transitory computer-readable media are disclosed to optimize control of power infrastructure sites using a multi-tenant charging system-of-systems. After reading this description, it will become apparent to one skilled in the art how to implement the invention in various alternative embodiments and alternative applications. However, although various embodiments of the present invention will be described herein, it is understood that these embodiments are presented by way of example and illustration only, and not limitation. As such, this detailed description of various embodiments should not be construed to limit the scope or breadth of the present invention as set forth in the appended claims.

The term "power infrastructure site" refers to any infrastructure with clearly defined electrical boundaries. Generally, a power infrastructure site will comprise an electrical distribution network with interconnected loads, and is capable of being independently controlled. For example, a power infrastructure site may be a power depot and/or microgrid comprising a plurality of infrastructure assets. However, a power infrastructure site could also consist of a single infrastructure asset. An infrastructure asset may comprise a power generator, energy storage system, load, and/or any other component of the power infrastructure site.

The term "power depot" refers to any power infrastructure site that comprises at least one charging station configured to be electrically connected to a flexible load to charge a battery of the flexible load and/or discharge the battery of the flexible load. It should be understood that a power depot may also comprise inflexible loads. As one example, a power depot may be an electric vehicle (EV) depot that provides private charging for a fleet of electric vehicles for a municipal mass transit system, business, utility provider, or other entity, public charging for personal electric vehicles, private charging for personal electric vehicles (e.g., at the residence of the owner of the personal electric vehicle), and/or the like.

The term "microgrid" refers to any power infrastructure site that comprises a local electric grid that is capable of operating independently from the rest of the electric grid. A microgrid may comprise a plurality of infrastructure assets (e.g., generator(s), energy storage system(s), load(s), and/or the like), connected through a local distribution network, under the same point of common coupling. The infrastructure assets of a microgrid will generally comprise at least some type of power generator or energy storage system, but may comprise any combination of infrastructure assets. It should be understood that a power depot and microgrid are not mutually exclusive, and that, in some instances, a power infrastructure site may comprise both a power depot and a microgrid.

The term "flexible load" refers to any load that has flexibility in at least one characteristic that can be represented by a variable in an optimization model. One such characteristic may be a location at which the flexible load is charged or discharged. A flexible load with flexibility in location can be charged or discharged at any of a plurality of locations in one or a plurality of power infrastructure sites. Another such characteristic may be the timing at which the flexible load is charged or discharged. A flexible load with flexibility in timing can be charged or discharged according to different timings in terms of start time, end time, time ranges, time durations, and/or the like. Another such characteristic may be the power flow rate at which the flexible load is charged or discharged. A flexible load with flexibility in power flow rate can be charged at any of a plurality of different power flow rates (e.g., at any power flow rate within a range of power flow rates). Another such characteristics may be the operational state of the flexible load. A flexible load with flexibility in operational state (e.g., water heater, air conditioning, compressor, etc.) can be transitioned to another state that reduces power consumption (e.g., low-power mode, turned off, discharge, etc.) to increase the amount of energy available to other loads and/or decrease the total amount of consumed energy. It should be understood that these are simply examples of characteristics, and that the flexible load may be flexible in terms of other characteristics, even if not specifically described herein. A flexible load may be flexible in terms of only one characteristic, all characteristics, or any subset of characteristics. In contrast, the term "inflexible load" refers to any load that is not flexible in any characteristic.

In a contemplated embodiment, the flexible load is an electric vehicle, and the power infrastructure site is an EV depot. Electric vehicles may be flexible at least with respect to their locations. In other words, because an electric vehicle is mobile, an electric vehicle can generally be charged at any of a plurality of available charging stations within any one of a plurality of EV depots. In particular, the electrical vehicle comprises an on-board battery that can be electrically connected to any of a plurality of available charging stations within the EV depot. Similar types of flexible loads include, without limitation, drones, robotic systems, mobile machines, mobile devices, power tools, and the like.

However, the disclosed approach is not limited to electric vehicles or other mobile loads. Rather, the disclosed approach may be applied to any load, whether mobile or stationary, as long as the load has one or more flexible characteristics that can be defined in terms of variable(s) in an optimization model. For example, a flexible load may simply consist of a stationary or mobile battery, or may be a system that consumes power without having any on-board battery to store power. A stationary flexible load will generally not have flexibility in location, but may have flexibility in terms of timing, power flow rate, operational state, and/or the like.

A power infrastructure site may also comprise one or more flexible power generators. The term "flexible power generator" refers to any power generator which can be controlled to either increase and/or decrease the amount of power that is generated. Examples of flexible power generators include, without limitation, a diesel generator, a hydrogen fuel cell, distributed energy resources whose power output can be curtailed, and/or the like. Optimization of a power infrastructure site can optimize variables for both the flexible loads and the flexible power generators.

As used herein, the term "distribution network" refers to the interconnection of electrical components, within a power infrastructure site, that distributes power to the flexible loads. These electrical components may comprise one or more intermittent and/or non-intermittent distributed energy resources, including renewable energy resources (e.g., solar power generator, wind power generator, geothermal power generator, hydroelectric power generator, fuel cell, etc.) and/or non-renewable energy resources (e.g., diesel generator, natural gas generator, etc.), one or more battery energy storage systems (BESSs), and/or like. Additionally or alternatively, in the event that the power infrastructure site comprises a power depot, these electrical components may comprise charging stations. Despite the term "charging," the term "charging station" encompasses a station that is capable of discharging a load (e.g., drawing power out of an on-board battery of the load) in addition to charging the load (e.g., supplying power to an on-board battery of the load), as well as a station that is only capable of charging a load and a station that is only capable of discharging a load. The electrical components in the power infrastructure site can be thought of as "nodes" of the distribution network, and electrical connections between these electrical components can be thought of as "edges" connecting the nodes within the distribution network. The distribution network of a power infrastructure site may be connected to other distribution networks (e.g., during normal operation) or may be isolated (e.g., in the case of a microgrid during independent operation).

1. Example Infrastructure

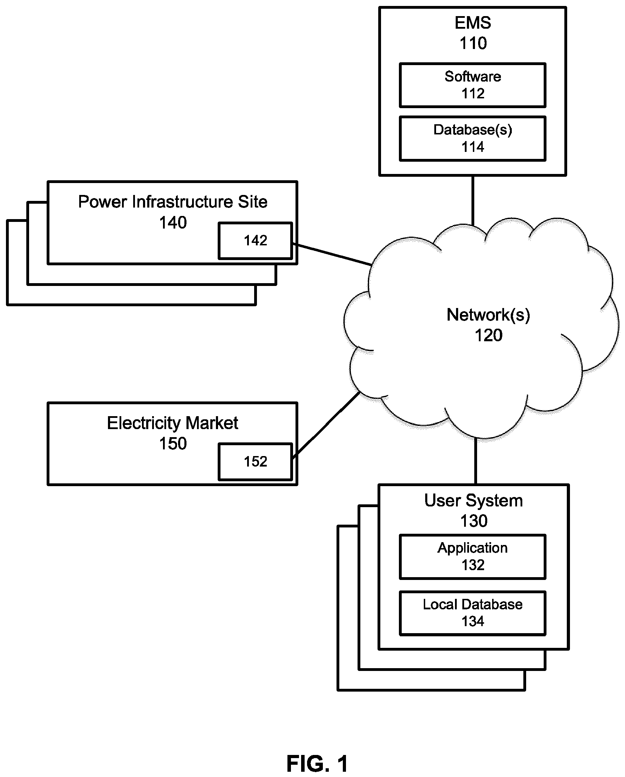

FIG. 1 illustrates an example infrastructure in which one or more of the disclosed processes may be implemented, according to an embodiment. The infrastructure may comprise an energy management system (EMS) 110 (e.g., comprising one or more servers) which hosts and/or executes one or more of the various functions, processes, methods, and/or software modules described herein. EMS 110 may comprise dedicated servers, or may instead be implemented in a computing cloud, in which the resources of one or more servers are dynamically and elastically allocated to multiple tenants based on demand. In either case, the servers may be collocated and/or geographically distributed. EMS 110 may also comprise or be communicatively connected to software 112 and/or one or more databases 114. In addition, EMS 110 may be communicatively connected to one or more user systems 130, power infrastructure sites 140, and/or electricity markets 150 via one or more networks 120.

Network(s) 120 may comprise the Internet, and EMS 110 may communicate with user system(s) 130, power infrastructure site(s) 140, and/or electricity market(s) 150 through the Internet using standard transmission protocols, such as HyperText Transfer Protocol (HTTP), HTTP Secure (HTTPS), File Transfer Protocol (FTP), FTP Secure (FTPS), Secure Shell FTP (SFTP), eXtensible Messaging and Presence Protocol (XMPP), Open Field Message Bus (OpenFMB), IEEE Smart Energy Profile Application Protocol (IEEE 2030.5), and the like, as well as proprietary protocols. While EMS 110 is illustrated as being connected to various systems through a single set of network(s) 120, it should be understood that EMS 110 may be connected to the various systems via different sets of one or more networks. For example, EMS 110 may be connected to a subset of user systems 130, power infrastructure sites 140, and/or electricity markets 150 via the Internet, but may be connected to one or more other user systems 130, power infrastructure sites 140, and/or electricity markets 150 via an intranet. Furthermore, while only a few user systems 130 and power infrastructure sites 140, one electricity market 150, one instance of software 112, and one set of database(s) 114 are illustrated, it should be understood that the infrastructure may comprise any number of user systems, power infrastructure sites, electricity markets, software instances, and databases.

User system(s) 130 may comprise any type or types of computing devices capable of wired and/or wireless communication, including without limitation, desktop computers, laptop computers, tablet computers, smart phones or other mobile phones, servers, game consoles, televisions, set-top boxes, electronic kiosks, point-of-sale terminals, embedded controllers, programmable logic controllers (PLCs), and/or the like. However, it is generally contemplated that user system(s) 130 would comprise personal computers, mobile devices, or workstations by which agents of operator(s) of power infrastructure sites(s) 140 can interact, as users, with EMS 110. These interactions may comprise inputting data (e.g., parameters for configuring one or more of the processes described herein) and/or receiving data (e.g., the outputs of one or more processes described herein) via a graphical user interface provided by EMS 110 or a system between EMS 110 and user system(s) 130. The graphical user interface may comprise screens (e.g., webpages) that include a combination of content and elements, such as text, images, videos, animations, references (e.g., hyperlinks), frames, inputs (e.g., textboxes, text areas, checkboxes, radio buttons, drop-down menus, buttons, forms, etc.), scripts (e.g., JavaScript), and the like, including elements comprising or derived from data stored in one or more databases (e.g., database(s) 114).

EMS 110 may execute software 112, comprising one or more software modules that implement one or more of the disclosed processes. In addition, EMS 110 may comprise, be communicatively coupled with, or otherwise have access to one or more database(s) 114 that store the data input into and/or output from one or more of the disclosed processes. Any suitable database may be utilized, including without limitation MySQL™, Oracle™, IBM™, Microsoft SQL™, Access™, PostgreSQL™, and the like, including cloud-based databases, proprietary databases, and unstructured databases (e.g., MongoDB™).

EMS 110 may communicate with power infrastructure site(s) 140 and/or electricity market(s) 150 via an application programming interface (API). For example, EMS 110 may "push" data (i.e., transmit the data on its own initiative) to each power infrastructure site 140 via an API of a control system 142 of power infrastructure site 140. Control system 142 may be a Supervisory Control and Data Acquisition (SCADA) system. Alternatively or additionally, control system 142 of power infrastructure site 140 may "pull" data (i.e., initiate transmission of the data via a request) from EMS 110 via an API of EMS 110. Similarly, EMS 110 may push data to an electricity market interface 152 of electricity market 150 via an API of electricity market interface 152, and/or electricity market interface 152 may pull data from EMS 110 via an API of EMS 110.

2. Example Processing System

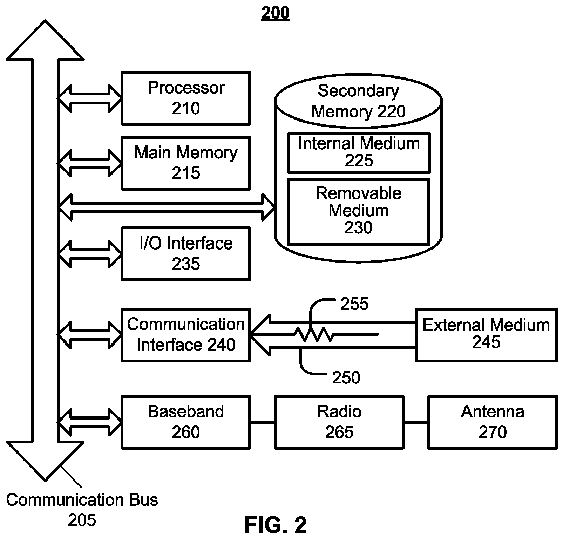

FIG. 2 is a block diagram illustrating an example wired or wireless system 200 that may be used in connection with various embodiments described herein. For example, system 200 may be used as or in conjunction with one or more of the functions, processes, or methods (e.g., to store and/or execute software 112) described herein, and may represent components of EMS 110, user system(s) 130, power infrastructure sites(s) 140, control system 142, electricity market interface 152, and/or other processing devices described herein. System 200 can be a server or any conventional personal computer, or any other processor-enabled device that is capable of wired or wireless data communication. Other computer systems and/or architectures may be also used, as will be clear to those skilled in the art.

System 200 preferably includes one or more processors 210. Processor(s) 210 may comprise a central processing unit (CPU). Additional processors may be provided, such as a graphics processing unit (GPU), an auxiliary processor to manage input/output, an auxiliary processor to perform floating-point mathematical operations, a special-purpose microprocessor having an architecture suitable for fast execution of signal-processing algorithms (e.g., digitalsignal processor), a slave processor subordinate to the main processing system (e.g., back-end processor), an additional microprocessor or controller for dual or multiple processor systems, and/or a coprocessor. Such auxiliary processors may be discrete processors or may be integrated with processor 210. Examples of processors which may be used with system 200 include, without limitation, any of the processors (e.g., Pentium™, Core i7™, Xeon™, etc.) available from Intel Corporation of Santa Clara, California, any of the processors available from Advanced Micro Devices, Incorporated (AMD) of Santa Clara, California, any of the processors (e.g., A series, M series, etc.) available from Apple Inc. of Cupertino, any of the processors (e.g., Exynos™) available from Samsung Electronics Co., Ltd., of Seoul, South Korea, any of the processors available from NXP Semiconductors N.V. of Eindhoven, Netherlands, and/or the like.

Processor 210 is preferably connected to a communication bus 205. Communication bus 205 may include a data channel for facilitating information transfer between storage and other peripheral components of system 200. Furthermore, communication bus 205 may provide a set of signals used for communication with processor 210, including a data bus, address bus, and/or control bus (not shown). Communication bus 205 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, standards promulgated by the Institute of Electrical and Electronics Engineers (IEEE) including IEEE 488 general-purpose interface bus (GPIB), IEEE 696/S-100, and/or the like.

System 200 preferably includes a main memory 215 and may also include a secondary memory 220. Main memory 215 provides storage of instructions and data for programs executing on processor 210, such as one or more of the functions and/or modules discussed herein (e.g., software 112). It should be understood that programs stored in the memory and executed by processor 210 may be written and/or compiled according to any suitable language, including without limitation C/C++, Java, JavaScript, Perl, Visual Basic, .NET, and the like. Main memory 215 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

Secondary memory 220 may optionally include an internal medium 225 and/or a removable medium 230. Removable medium 230 is read from and/or written to in any well-known manner. Removable storage medium 230 may be, for example, a magnetic tape drive, a compact disc (CD) drive, a digital versatile disc (DVD) drive, other optical drive, a flash memory drive, and/or the like. Secondary memory 220 is a non-transitory computer-readable medium having computer-executable code (e.g., software 112) and/or other data stored thereon. The computer software or data stored on secondary memory 220 is read into main memory 215 for execution by processor 210.

In alternative embodiments, secondary memory 220 may include other similar means for allowing computer programs or other data or instructions to be loaded into system 200. Such means may include, for example, a communication interface 240, which allows software and data to be transferred from external storage medium 245 to system 200. Examples of external storage medium 245 may include an external hard disk drive, an external optical drive, an external magneto-optical drive, and/or the like. Other examples of secondary memory 220 may include semiconductor-based memory, such as programmable read-only memory (PROM), erasable programmable read-only memory (EPROM), electrically erasable read-only memory (EEPROM), and flash memory (block-oriented memory similar to EEPROM).

As mentioned above, system 200 may include a communication interface 240. Communication interface 240 allows software and data to be transferred between system 200 and external devices (e.g. printers), networks, or other information sources. For example, computer software or executable code may be transferred to system 200 from a network server (e.g., platform 110) via communication interface 240. Examples of communication interface 240 include a built-in network adapter, network interface card (NIC), Personal Computer Memory Card International Association (PCMCIA) network card, card bus network adapter, wireless network adapter, Universal Serial Bus (USB) network adapter, modem, a wireless data card, a communications port, an infrared interface, an IEEE 1394 fire-wire, and any other device capable of interfacing system 200 with a network (e.g., network(s) 120) or another computing device. Communication interface 240 preferably implements industry-promulgated protocol standards, such as Ethernet IEEE 802 standards, Fiber Channel, digital subscriber line (DSL), asynchronous digital subscriber line (ADSL), frame relay, asynchronous transfer mode (ATM), integrated digital services network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Software and data transferred via communication interface 240 are generally in the form of electrical communication signals 255. These signals 255 may be provided to communication interface 240 via a communication channel 250. In an embodiment, communication channel 250 may be a wired or wireless network (e.g., network(s) 120), or any variety of other communication links. Communication channel 250 carries signals 255 and can be implemented using a variety of wired or wireless communication means including wire or cable, fiber optics, conventional phone line, cellular phone link, wireless data communication link, radio frequency ("RF") link, or infrared link, just to name a few.

Computer-executable code (e.g., computer programs, such as software 112) is stored in main memory 215 and/or secondary memory 220. Computer programs can also be received via communication interface 240 and stored in main memory 215 and/or secondary memory 220. Such computer programs, when executed, enable system 200 to perform the various functions of the disclosed embodiments as described elsewhere herein.

In this description, the term "computer-readable medium" is used to refer to any non-transitory computer-readable storage media used to provide computer-executable code and/or other data to or within system 200. Examples of such media include main memory 215, secondary memory 220 (including internal memory 225 and/or removable medium 230), external storage medium 245, and any peripheral device communicatively coupled with communication interface 240 (including a network information server or other network device). These non-transitory computer-readable media are means for providing executable code, programming instructions, software, and/or other data to system 200.

In an embodiment that is implemented using software, the software may be stored on a computer-readable medium and loaded into system 200 by way of removable medium 230, I/O interface 235, or communication interface 240. In such an embodiment, the software is loaded into system 200 in the form of electrical communication signals 255. The software, when executed by processor 210, preferably causes processor 210 to perform one or more of the processes and functions described elsewhere herein.

In an embodiment, I/O interface 235 provides an interface between one or more components of system 200 and one or more input and/or output devices. Example input devices include, without limitation, sensors, keyboards, touch screens or other touch-sensitive devices, cameras, biometric sensing devices, computer mice, trackballs, pen-based pointing devices, and/or the like. Examples of output devices include, without limitation, other processing devices, cathode ray tubes (CRTs), plasma displays, light-emitting diode (LED) displays, liquid crystal displays (LCDs), printers, vacuum fluorescent displays (VFDs), surfaceconduction electron-emitter displays (SEDs), field emission displays (FEDs), and/or the like. In some cases, an input and output device may be combined, such as in the case of a touch panel display (e.g., in a smartphone, tablet, or other mobile device).

System 200 may also include optional wireless communication components that facilitate wireless communication over a voice network and/or a data network (e.g., in the case of user system 130 that is a smart phone or other mobile device). The wireless communication components comprise an antenna system 270, a radio system 265, and a baseband system 260. In system 200, radio frequency (RF) signals are transmitted and received over the air by antenna system 270 under the management of radio system 265.

In an embodiment, antenna system 270 may comprise one or more antennae and one or more multiplexors (not shown) that perform a switching function to provide antenna system 270 with transmit and receive signal paths. In the receive path, received RF signals can be coupled from a multiplexor to a low noise amplifier (not shown) that amplifies the received RF signal and sends the amplified signal to radio system 265.

In an alternative embodiment, radio system 265 may comprise one or more radios that are configured to communicate over various frequencies. In an embodiment, radio system 265 may combine a demodulator (not shown) and modulator (not shown) in one integrated circuit (IC). The demodulator and modulator can also be separate components. In the incoming path, the demodulator strips away the RF carrier signal leaving a baseband receive audio signal, which is sent from radio system 265 to baseband system 260.

If the received signal contains audio information (e.g., a user system 130 comprising a smart phone or other mobile device), then baseband system 260 decodes the signal and converts it to an analog signal. Then the signal is amplified and sent to a speaker. Baseband system 260 also receives analog audio signals from a microphone. These analog audio signals are converted to digital signals and encoded by baseband system 260. Baseband system 260 also encodes the digital signals for transmission and generates a baseband transmit audio signal that is routed to the modulator portion of radio system 265. The modulator mixes the baseband transmit audio signal with an RF carrier signal, generating an RF transmit signal that is routed to antenna system 270 and may pass through a power amplifier (not shown). The power amplifier amplifies the RF transmit signal and routes it to antenna system 270, where the signal is switched to the antenna port for transmission.

Baseband system 260 is also communicatively coupled with processor(s) 210. Processor(s) 210 may have access to data storage areas 215 and 220. Processor(s) 210 are preferably configured to execute instructions (i.e., computer programs, such as the disclosed software) that can be stored in main memory 215 or secondary memory 220. Computer programs can also be received from baseband processor 260 and stored in main memory 210 or in secondary memory 220, or executed upon receipt. Such computer programs, when executed, enable system 200 to perform the various functions of the disclosed embodiments.

3. Example Power Infrastructure Site

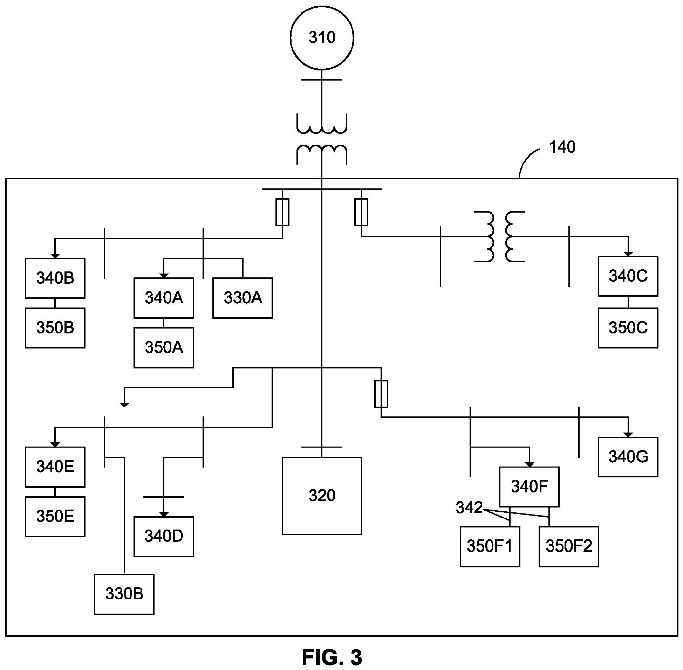

FIG. 3 illustrates a one-line diagram of an example distribution network of an example power infrastructure sites 140, according to an embodiment. As one non-limiting example, power infrastructure site 140 may be an EV depot for charging electric vehicles as flexible loads. Power infrastructure site 140 is connected to a power grid 310, from which electricity may be purchased (e.g., from electricity market 150). The purchase price of electricity may vary throughout each day (e.g., higher during the day than at night) and across days (e.g., higher on summer days than winter days), according to a time-of-use (ToU) rate. The ToU rate may assign peak rates, partial-peak rates, and off-peak rates to various time periods (e.g., each hourly interval in a day), representing the price of electricity during those time periods.

The distribution network of power infrastructure site 140 may comprise nodes representing one or a plurality of distributed energy resources in power infrastructure site 140, including, for example, one or a plurality of battery energy storage systems 320 and/or one or a plurality of power generators 330, illustrated as power generators 330A and 330B. Power generator(s) 330 may comprise renewable energy resources (e.g., solar power generator, wind power generator, geothermal power generator, hydroelectric power generator, fuel cell, etc.) and/or non-renewable energy resources (e.g., diesel generator, natural gas generator, etc.). For example, power generator 330A may be a solar power generator comprising a plurality of photovoltaic cells that convert sunlight into electricity, and power generator 330B may be a diesel generator that burns diesel gasoline to produce electricity.

The distribution network of power infrastructure site 140 may also comprise nodes representing one or a plurality of charging stations 340 in power infrastructure site 140. In the illustrated example, power infrastructure site 140 is a power depot comprising a plurality of charging stations 340A, 340B, 340C, 340D, 340E, 340F, and 340G. Each charging station 340 may comprise one or a plurality of chargers 342. For example, charging station 340F is illustrated with two chargers 342. Each charger 342 is configured to be electrically connected to a flexible load 350, so as to supply electricity to one or more batteries of the flexible load 350 and/or discharge electricity from one or more batteries of the flexible load 350. In the case of supplying or charging a battery of a flexible load 350, electricity may flow from a power generator 330 and/or grid 310, through the distribution network, to the battery of the flexible load 350. Conversely, in the case of discharging a battery of a flexible load 350, electricity may flow from the battery of the flexible load 350 into the distribution network and into a battery energy storage system 320, grid 310, and/or another flexible load 350. At any given time, some chargers 342 may be connected to a flexible load 350, illustrated as flexible loads 350A, 350B, 350C, 350E, 350F1, and 350F2, whereas other chargers 342 may be unconnected to a flexible load 350 and available to receive an incoming flexible load 350.

In an embodiment, two or more power infrastructure sites 340 may be connected via a transmission network (not shown) or within the same distribution network. In this case, power can be transmitted between two power infrastructure sites 340. For example, a first power infrastructure site 140 may transmit power from one or more of its infrastructure assets (e.g., battery energy storage system(s) 320, power generator(s) 330, and/or flexible load(s) 350), over the network, to a second power infrastructure site 140, to charge one or more infrastructure assets (e.g., battery energy storage system(s) 320 and/or flexible load(s) 350) of the second power infrastructure site 140.

One or more charging stations 340 or individual chargers 342 may be configured to start charging a flexible load 350 (e.g., at a settable power flow rate), terminate charging of a flexible load 350, start discharging a flexible load 350 (e.g., at a settable power flow rate), terminate discharging of a flexible load 350, and/or the like, under the control of control system 142, EMS 110, and/or another controller. For example, a charging station 340 and/or charger 342 may comprise a processing system 200 that receives commands from a controller (e.g., control system 142 and/or EMS 110) via communication interface 240, processes the commands using processor 210 and main memory 215, and controls an actuator (e.g., one or more switches) to start or terminate charging or discharging according to the processed commands.

It should be understood that power infrastructure site 140 may comprise other loads, in addition to flexible loads 350. For example, power infrastructure site 140 may comprise auxiliary loads for operating various functions of power infrastructure site 140. However, even these auxiliary loads may be considered flexible loads 350 if they are flexible in at least one characteristic (e.g., operational state). It should also be understood that each battery energy storage system 320 can function as both a power source (i.e., when discharging) and a load (i.e., when charging), and can also be considered a flexible load 350.

Parameters (e.g., voltage, current, setpoint, etc.) of each node within the distribution network of power infrastructure site 140 may be monitored by EMS 110 and/or simulated by EMS 110 (e.g., during a load flow analysis). Thus, EMS 110 may monitor and/or simulate parameters of nodes within the distribution network, and control one or more physical components of power infrastructure site 140, such as charging station(s) 340, charger(s) 342, power generator(s) 330, battery energy storage system(s) 320, and/or the like, based on those parameters. This control may be performed periodically or in real time, and may be performed directly or indirectly (e.g., via control system 142).

The illustrated power infrastructure site 140 comprises a certain number of charging stations 340. However, it should be understood that a power infrastructure site 140 may comprise any number of charging stations 340, including only a single charging station 340. In addition, each charging station 340 may comprise any number of chargers 342, including only a single charger 342. In the simplest form, a power infrastructure site 140 could consist of a single charging station 340 consisting of a single charger 342, such as a charging station 340 in a residence, public parking spot, or the like. In addition, although all flexible loads 350 are illustrated as connected to a charging station, one or more flexible loads 350 may be connected to the distribution network without any intervening charging station 340.

A single EMS 110 may manage a single power infrastructure site 140 or a plurality of power infrastructure sites 140. In the case that EMS 110 manages a plurality of power infrastructure sites 140, the managed power infrastructure sites 140 may be identical to, similar to, or different than each other. For example, a homogeneous mixture of power infrastructure sites 140 may consist of a plurality of power depots for one or a plurality of fleets of electric vehicles. In contrast, a heterogeneous mixture of power infrastructure sites 140 may comprise a mix of power depot(s), residential charging station(s) 340, public charging station(s) 340, microgrid(s), and/or the like.

4. Example Data Flow

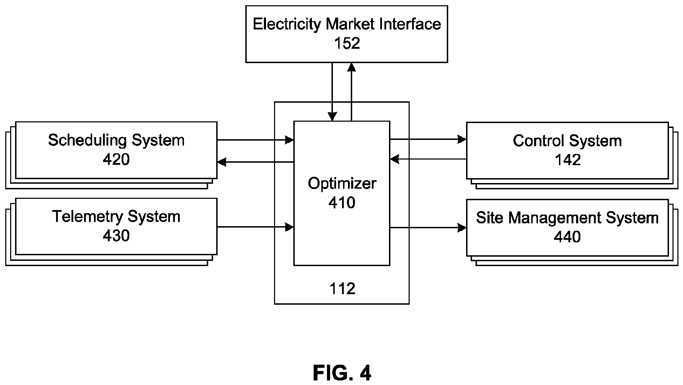

FIG. 4 illustrates example data flows between various components of an optimization infrastructure, according to an embodiment. Software 112, hosted on platform 110, may implement an optimizer 410. Optimizer 410 may generate an optimization model that outputs a target value, based on one or more variables and an input that comprises a schedule for one or more flexible loads 350 in one or more power infrastructure sites 140. The optimization model represents a concrete software-based implementation of an optimization problem. Optimizer 410 may solve the optimization model to determine values for the one or more variables that optimize the target value, subject to zero, one, or a plurality of constraints (e.g., inequality and/or equality constraints representing limitations on physical and/or technological capabilities, flexibility of loads and/or power generators, etc.). This optimization may comprise minimizing the target value (e.g., if the target value represents a cost) or maximizing the target value (e.g., if the target value represents a performance metric). The determined values of the variable(s) may represent an operating configuration (e.g., setpoints, schedules, etc.) of one or more power infrastructure sites 140 over a time period. Optimizer 410 may also initiate control of one or more physical components in one or more power infrastructure sites 140 based on the determined values for the one or more variables.

Optimizer 410 may update and solve the optimization model periodically, based on real-time or updated data. For example, the optimizer may update and solve the optimization model for operation of power infrastructure site(s) 140 in a sliding time window, representing an optimization period. The sliding time window continually or continuously advances to encompass the next time period for which operation of power infrastructure site(s) 140 is to be optimized. It should be understood that the start of the sliding time window may be the current time or some future time (e.g., 1 minute, 5 minutes, 10 minutes, 15 minutes, 30 minutes, 1 hour, 24 hours, etc., in the future), such that optimization is performed in advance of a future time period, encompassed by the sliding time window, for which the optimization is being performed. In an embodiment, the sliding time window may advance according to a time step (e.g., every 15 minutes), and utilize the most recent data available within a time range (e.g., a time range extending into the past that is equal in size to the time step). The size of the sliding time window may be any suitable duration (e.g., 15 minutes, 30 minutes, 1 hour, 24 hours, etc.).

Optimizer 410 may collect the data that it utilizes for optimization (e.g., as the input to the optimization model) from one or more scheduling systems 420, one or more telemetry systems 430, one or more control systems 142 of one or more power infrastructure sites 140, and/or one or more electricity market interfaces 152 of one or more electricity markets 150. It should be understood that these are simply examples of data flows, and that optimizer 410 may collect data from other systems (e.g., potentially including site management system(s) 440). For example, optimizer 410 may receive solutions from other optimizers, which may be incorporated into the input to the optimization model. In this case, optimizer 410 can focus on one aspect of an overall optimization, such that it does not have to integrate every detail of optimization into the optimization model.

In an embodiment, optimizer 410 may merge the collected data for a plurality of power infrastructure sites 140 into a single virtual site model, and perform a single holistic optimization of the virtual site model, to optimize operation of the plurality of power infrastructure sites 140 as a single unit. This virtual site model may represent a multi-tenant charging system-of-systems that aggregates a plurality of power infrastructure sites 140 (e.g., EV depots) for a plurality of tenants (e.g., EV fleet operators).

Optimizer 410 may output data to one or more scheduling systems 420, one or more control systems 142 of one or more power infrastructure sites 140, one or more site management systems 440, and/or one or more electricity market interfaces 152 of one or more electricity markets 150. It should be understood that these are simply examples of data flows, and that optimizer 410 may output data to other systems (e.g., potentially including telemetry system(s) 430). For example, optimizer 410 may output its solution or other data to one or more other optimizers, which may each incorporate this data into an input to its own optimization model. In this case, optimizer 410 can focus on one aspect of an overall optimization, such that it does not have to integrate every detail of optimization into the optimization model.

Scheduling system(s) 420, telemetry system(s) 430, and/or site management system(s) 440 may be hosted on EMS 110 or may be external to EMS 110. In either case, when collecting data, optimizer 410 may receive the data by either pulling the data from the respective system via an API of the respective system, or by the data being pushed by the respective system to optimizer 410 via an API of optimizer 410. Similarly, optimizer 410 may output data by either pushing the data to the respective system via an API of the respective system, or by the data being pulled by the respective system via an API of optimizer 410.

Each scheduling system 420 may manage the time tables and routing of flexible loads 350 (e.g., a fleet of electric vehicles). Optimizer 410 may receive schedule information from each scheduling system 420. The schedule information, provided by scheduling system 420, may comprise planned schedules for flexible loads 350. For example, the planned schedules may comprise, for each flexible load 350, a scheduled arrival time at which the flexible load 350 is expected to arrive at a power infrastructure site 140, a scheduled departure time at which the flexible load 350 is expected to depart from power infrastructure site 140, an auxiliary-task schedule defining a time period in which the flexible load 350 is expected to perform or undergo auxiliary tasks (e.g., pre-conditioning the cabin and/or battery of an electric vehicle, undergoing cleaning, maintenance, or repairs, etc.), a power flow schedule defining a power flow rate or profile for charging or discharging the flexible load 350, a priority of the flexible load 350 relative to other flexible loads 350 (e.g., indicating the relative cost of a delay in charging the flexible load 350), a preferred power infrastructure site 140 to be assigned to the flexible load 350, and/or the like. In addition, where flexible loads 350 have routes, the schedule information may comprise, for each flexible load 350, the route assigned to the flexible load 350.

After solving the optimization model, optimizer 410 may output data, associated with a scheduling system 420, to that scheduling system 420 or an intervening system. For example, in the event that optimizer 410 performs optimization for a plurality of power infrastructure sites 140, optimizer 410 may output a ranked list of power infrastructure sites 140, ordered, for instance, from the power infrastructure site 140 with the most capacity to the power infrastructure site 140 with the least capacity. Such information may be used by scheduling system 420 or an intervening system to update route assignments for flexible loads 350 (e.g., by re-routing one or more flexible loads 350 from a power infrastructure 140 with less capacity to a power infrastructure site 140 with greater capacity). Additionally or alternatively, optimizer 410 may output a ranked list of flexible loads 350, ordered, for instance, from the flexible load 350 that will be charged to an acceptable state of charge (SoC) first to the flexible load 350 that will be charged to an acceptable state of charge last (e.g., reflecting which electric vehicle can be readied first or unplugged the longest). As another example, optimizer 410 or an intervening system could provide recommendations to improve scheduling and/or provide data from which such recommendations may be derived. For instance, if flexible loads 350 are electric vehicles, such data may identify an electric vehicle that is frequently late, so that the electric vehicle's route can be changed (e.g., assigned to another electric vehicle, split with another electric vehicle, etc.). More generally, scheduling system 420 or an intervening system may analyze the data, provided by optimizer 410, to identify inefficiencies (e.g., bottlenecks, electric vehicles whose schedules require severely fast charging, etc.) in the schedule of flexible loads 350 and/or inaccurate parameters (e.g., actual energy consumed by pre-conditioning, etc.), and update the schedule of flexible loads 350 (e.g., re-optimize EV route assignments) to eliminate or mitigate those inefficiencies and/or reflect more accurate parameters.

Each telemetry system 430 may collect telemetric information for one or more flexible loads 350. A telemetry system 430 may be on board each flexible load 350, and transmit real-time telemetric information to optimizer 410. For example, in the event that flexible load 350 is an electric vehicle, telemetry system 430 may be embedded (e.g., as software or hardware) within an electronic control unit (ECU) of the electric vehicle and communicate over a wireless communication network (e.g., cellular communication network). Alternatively, telemetry system 430 may be external to flexible loads 350. In this case, telemetry system 430 may collect real-time telemetric information for a plurality of flexible loads 350, and forward or relay the collected telemetric information to optimizer 410 in real time. It should be understood that, as used herein, the terms "real-time" or "real time" contemplate, not only events which occur simultaneously, but also events which are separated by delays resulting from ordinary latencies in processing, communications, and/or the like, and/or resulting from the use of time steps (e.g., with respect to a sliding time window for optimization).

Optimizer 410 may receive the telemetric information from each telemetry system 430. The telemetric information, provided by telemetry system 430, may comprise one or more parameters for each flexible load 350 for which the transmitting telemetry system 430 collects data. For each flexible load 350, these parameter(s) may comprise the estimated arrival time of the flexible load 350 at the scheduled power infrastructure site 140, the current state of charge of the battery on board the flexible load 350, and/or the like. It should be understood that these parameters may change over time, and that updated telemetric information, reflecting any changes, may be received periodically by optimizer 410 (e.g., and used as input to the optimization model for the current optimization period). The real-time telemetric information reduces uncertainty in the optimization model.

Each site management system 440 may manage infrastructure assets, including flexible loads 350, and staff within one or more power infrastructure sites 140. After solving the optimization model, optimizer 410 may output site information to each site management system 440. For example, this site information may comprise a ranked list of flexible loads 350, ordered, for instance, from the flexible load 350 that can be unplugged the longest amount of time to the flexible load 350 that can be unplugged the shortest amount of time. Such information may be used by site management system 440, for instance, to determine which flexible loads 350 can be serviced and/or the like. Additionally or alternatively, this site information may comprise an assignment or mapping of flexible loads 350 to charging stations 340. Such a mapping can be used to automatically route flexible loads 350 to their mapped charging stations 340, for example, by transmitting routing instructions, such as the location of the mapped charging station 340, to a navigation system within each flexible load 350.

Each control system 142 may provide independent control of a power infrastructure site 140. After solving the optimization model, optimizer 410 may output control information, associated with control of a power infrastructure site 140, to the control system 142 associated with that power infrastructure site 140. Such control information may be provided to the control system 142 of each power infrastructure site 140 that is managed by optimizer 410. The control information may comprise one or more control instructions that trigger one or more control operations at control system 142 and/or other information that is used during one or more control operations at control system 142. A control instruction may include, without limitation, an instruction to control a setpoint associated with a physical component of power infrastructure site 140 (e.g., a power flow rate associated with a charging station 340), an instruction to charge a flexible load 350, an instruction to discharge a flexible load 350, an instruction to perform pre-conditioning of a flexible load 350 (e.g., cooling of a cabin and/or battery of an electric vehicle, heating of a cabin of an electric vehicle, etc.), and/or the like. Other information may include, without limitation, a ranked list of charging stations 340 (e.g.,

ordered from charging stations 340 with the most capacity to charging stations 340 with the least capacity), a charging schedule for flexible loads 350, assignments or mappings of flexible loads 350 to charging stations 340, and/or the like.

Optimizer 410 may also receive data from each control system 142. For example, control system 142 may report events detected within the respective power infrastructure site 140 (e.g., a charger 342 of a charging station 340 being plugged into a flexible load 350), a state of charge detected for a plugged-in flexible load 350, an actual power flow or power flow rate between a charging station 340 and connected flexible load 350, and/or the like. These data may be received periodically by optimizer 410, and used as input to the optimization model for the current optimization period.

Electricity market interface 152 may provide an interface to an electricity market 150 in which the utility that operates grid 310 is a participant. In particular, electricity market 150 may enable an operator of a power infrastructure site 140 to purchase electricity from a utility or other energy provider (e.g., operating grid 310), sell electricity to an energy provider (e.g., operating grid 310), obtain service commitments from an energy provider, provide service commitments to an energy provider, and/or the like. Optimizer 410 may receive pricing information from electricity market interface 152. For example, this pricing information may comprise a forecast of the price for electricity from grid 310 in one or more future time periods (e.g., including the optimization period), uncertainty parameter(s) for the price forecast, applicable electricity tariffs, and/or the like. Optimizer 410 may incorporate this pricing information into the input to the optimization model. For example, the target value that is output by the optimization model may include an energy cost that is derived from the pricing information, in which case optimizing the target value may comprise minimizing the target value, and thereby the energy cost.

Optimizer 410 may receive a forecast of DER power generation from electricity market interface 152. Alternatively, optimizer 410 may receive a weather forecast from electricity market interface 152 or other external system (e.g., weather forecast service), and derive its own forecast of DER power generation. It should be understood that the power generated by renewable energy resources, such as solar power generators and wind power generators, may change significantly depending on the weather. Optimizer 410 may incorporate the forecast of DER power generation into the input to the optimization model, for example, to determine how much DER power generation will be available to power infrastructure site(s) 140 during the current optimization period.

Optimizer 410 may obtain service commitments from electricity market 150 via electricity market interface 152. For example, optimizer 410 may determine an energy demand required in the optimization period based on the solution to the optimization model (e.g., comprising the values for one or more variables in the optimization model that optimize the target value output by the optimization model). Optimizer 410 may transmit a request, for a service commitment for the determined energy demand in the respective optimization period from electricity market 150, to electricity market interface 152. In response, optimizer 410 may receive the requested service commitment for the energy demand in the respective optimization period from an energy provider via electricity market interface 152. If no energy provider on electricity market 150 will commit to the service, optimizer 410 may update and re-run the optimization model (e.g., with a constraint on the energy demand), and/or initiate or perform some other remedial action.

Optimizer 410 may obtain other services from electricity market 150 via electricity market interface 152. For example, optimizer 410 may receive service pricing for one or more services, offered by an energy provider on electricity market 150, from electricity market interface 152. Optimizer 410 may incorporate this service pricing into the input to the optimization model. Based on the solution to the optimization model, optimizer 410 may determine to purchase one or more services, and request a service commitment for the service(s) from electricity market 150 via electricity market interface 152. In response, optimizer 410 may receive the requested service commitment for the service(s) from electricity market interface 152. If no energy provider on electricity market 150 will commit to the service, optimizer 410 may update the input to the optimization model to exclude the service pricing and re-run the optimization model, and/or initiate or perform some other remedial action. In an embodiment, optimizer 410 may receive a schedule of requested service commitments via electricity market interface 152.

Optimizer 410 may provide service commitments to electricity market 150 via electricity market interface 152. For example, optimizer 410 may provide flexibility information for one or more power infrastructure site(s) 140 that it manages to electricity market 150 via electricity market interface 152. The flexibility information may comprise a curve of the price per kilowatt (kW) versus flexibility in the power infrastructure site(s) 140. An energy provider on electricity market 150 may purchase flexibility from optimizer 410 via electricity market interface 152. This flexibility can be utilized for curtailment (e.g., demand response) when needed. In an embodiment, optimizer 410 may receive a schedule of provided service commitments via electricity market interface 152.

It should be understood that the illustrated data flow is simply an example. Optimizer 410 may interface with fewer, more, or different sets of systems than those illustrated. Each system may be used to collect data to be incorporated into the input to the optimization model solved by optimizer 410 and/or as a destination for data output by optimizer 410. Additional examples of data that may be collected and used as input to the optimization model include, without limitation, the weather, the status of power infrastructure site(s) 140, financial figures related to power infrastructure site(s) 140, estimates of uncertainty (e.g., for planned schedules for flexible loads 350), and/or the like.

For example, optimizer 410 may interface with a weather forecast service to receive a weather forecast for the optimization period from the weather forecast service. The incorporation of weather forecasts into the optimization model can improve estimates of energy demand. For example, as discussed above, the weather forecast may be used to forecast DER generation, which can be incorporated into the input to the optimization model. Additionally or alternatively, optimizer 410 may utilize the weather forecast with a model of pre-conditioning to more accurately estimate the energy demand for pre-conditioning flexible loads 350. For instance, during relatively hot or cold time periods, more energy may be required to pre-condition (e.g., cool or heat) electric vehicles, than during temperate time periods.

It should be understood that the above examples are not limiting. Optimizer 410 may utilize other inputs and/or produce other outputs than those specifically described herein. Optimizer 410 may utilize a modular "building block" architecture, such that new inputs can be easily incorporated into the optimization model and/or existing inputs can be easily removed from the optimization model. Some of these inputs may represent solutions output by other optimization systems. In addition, as discussed in various examples, optimizer 410 may provide additional outputs (e.g., ranked lists) that describe capacity constraints of EV supply equipment (EVSE), such as charging stations 340. These additional outputs may be used by other systems (e.g., scheduling system 420, site management system 440, etc.), so that optimizer 410 does not have to integrate every detail of optimization.

5. Process Overview

Embodiments of processes for optimizing control of power infrastructure sites 140, using a multi-tenant charging system-of- systems, will now be described in detail. It should be understood that the described processes may be embodied in one or more software modules that are executed by one or more hardware processors, for example, as software 112 executed by processor(s) 210 of EMS 110. The described processes may be implemented as instructions represented in source code, object code, and/or machine code. These instructions may be executed directly by hardware processor(s) 210, or alternatively, may be executed by a virtual machine or container operating between the object code and hardware processors 210. In addition, the disclosed software may be built upon or interfaced with one or more existing systems.

Alternatively, the described processes may be implemented as a hardware component (e.g., general-purpose processor, integrated circuit (IC), application-specific integrated circuit (ASIC), digital signal processor (DSP), field-programmable gate array (FPGA) or other programmable logic device, discrete gate or transistor logic, etc.), combination of hardware components, or combination of hardware and software components. To clearly illustrate the interchangeability of hardware and software, various illustrative components, blocks, modules, circuits, and steps are described herein generally in terms of their functionality. Whether such functionality is implemented as hardware or software depends upon the particular application and design constraints imposed on the overall system. Skilled persons can implement the described functionality in varying ways for each particular application, but such implementation decisions should not be interpreted as causing a departure from the scope of the invention. In addition, the grouping of functions within a component, block, module, circuit, or step is for ease of description. Specific functions or steps can be moved from one component, block, module, circuit, or step to another without departing from the invention.

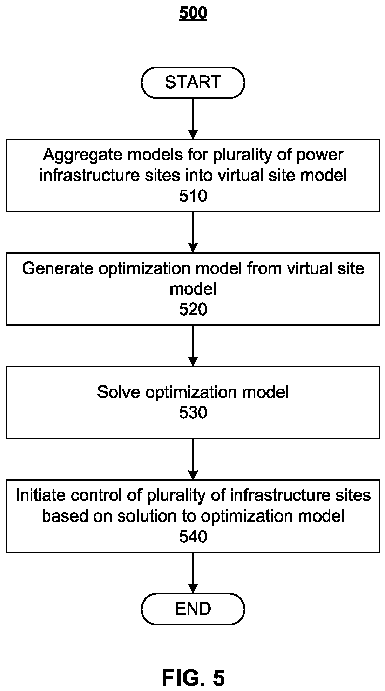

FIG. 5 illustrates an example process 500 for optimized control of power infrastructure sites using a multi-tenant charging system-of-systems, according to an embodiment. Process 500 may be implemented by optimizer 410. While process 500 is illustrated with a certain arrangement and ordering of subprocesses, process 500 may be implemented with fewer, more, or different subprocesses and a different arrangement and/or ordering of subprocesses. In addition, it should be understood that any subprocess, which does not depend on the completion of another subprocess, may be executed before, after, or in parallel with that other independent subprocess, even if the subprocesses are described or illustrated in a particular order.

In subprocess 510, models of a plurality of power infrastructure sites 140, which support flexible loads 350, are aggregated into a virtual site model. For example, a model of each power infrastructure site 140 that is managed by optimizer 410 may be stored in a data structure in memory (e.g., database(s) 114). The models for a plurality of power infrastructure sites 140 may be aggregated into a single virtual site model that models the components of all of the plurality of power infrastructure sites 140. Conceptually, the aggregation of power infrastructure sites 140 is similar to load aggregation. The virtual site model is a system-of-systems because it represents a plurality of power infrastructure sites 140. Where that plurality of power infrastructure sites 140 is operated by multiple operators and/or services multiple fleets, the virtual site model may be considered a multi-tenant system-of-systems.

In an embodiment, the plurality of power infrastructure sites 140, whose models are aggregated into the virtual site model, may be selected based on complementary utilization patterns to thereby increase utilization of infrastructure assets within the power infrastructure sites 140. For instance, a first power infrastructure site 140 that utilizes and/or charges flexible loads 350 according to a pattern that is the substantial inverse of the pattern of a second power infrastructure site 140 can be paired with that second power infrastructure site 140. As an example, the first power infrastructure site 140 may support a first EV fleet that operates during the day, whereas the second power infrastructure site 140 may support a second EV fleet that operates during the night. In this case, utilization can be increased by enabling both EV fleets to utilize both power infrastructure sites 140 during the optimization period. It should be understood that this is just one example, and that power infrastructure sites 140 with more complicated complementary patterns may be identified and aggregated in a similar manner.

In subprocess 520, an optimization model is generated from the virtual site model, output by subprocess 510. In an embodiment, the optimization model outputs a target value based on one or more variables and an input that comprises a schedule for flexible loads 350 in the plurality of power infrastructure sites 140 represented by the virtual site model.

A variable may represent a controllable parameter within the plurality of power infrastructure sites 140. Examples of a controllable parameter include, without limitation, a setpoint of a physical component (e.g., a non-intermittent distributed energy resource), a power flow rate at which to charge or discharge a flexible load 350, a state of charge to which to charge a flexible load 350 or battery energy storage system 320, a time at which to start charging or discharging a flexible load 350, a time at which to terminate charging or discharging of a flexible load 350, a time duration for charging or discharging a flexible load 350, an assignment or mapping of a flexible load 350 to a charging station 340 or power infrastructure site 140, or the like. Generally, the optimization model will include a plurality of variables, including a mix of different types of controllable parameters.

The schedule for flexible loads 350 may comprise a scheduled arrival time for each flexible load 350, a scheduled departure time for each flexible load 350, route information for each flexible load 350, a state of charge required for each flexible load at the scheduled departure time, and/or the like. The schedule for flexible loads 350 may be represented in the optimization model as constraints (e.g., inequality or equality constraints), or in some other suitable manner. It should be understood that the input to the optimization model may also incorporate other information, such as a forecast of energy pricing, a weather forecast, a forecast of DER generation, and/or the like.

Mathematically, the optimization model may be expressed as:

$$\min_{x} f(x)$$

wherein $x$ comprises values for all of the variable(s), and $f(x)$ is an objective function that calculates the target value that is produced from x. The objective function $f(x)$ represents the virtual site model.

In an embodiment in which the target value includes an energy cost, objective function $f(x)$ accounts for the energy price(s) during the optimization period when calculating the target value. For example, objective function $f(x)$ may determine a power demand profile produced by values x, and use the energy price(s) with the power demand profile (e.g., via multiplication of the power demand profile by the energy price(s)) to determine the target value as its output. Objective function $f(x)$ may also account for other costs that are associated with operation of power infrastructure site(s) 140 during the optimization period, such as grid fees, the cost of network services, indirect capital costs, and/or the like.

Objective function $f(x)$ may also account for the input, comprising the schedule for flexible loads 350 and/or other information (e.g., weather forecast, forecast of DER generation, etc.). Alternatively, the input may be converted into constraints. In this case, the optimization model is solved subject to the constraints, which may be expressed as:

$$\min_{x} f(x)$$

subject to

$$ec_i(x) = 0, i = 1, \dots, n_{ec}$$

$$ic_j(x) \leq 0, j = 1, \dots, n_{ic}$$

wherein $ec$ represents an equality constraint, $n_{ec}$ represents the number of equality constraints, $ic$ represents an inequality constraint, and $n_{ic}$ represents the number of inequality constraints. A solution to the optimization model may comprise values x that minimize the target value output by objective function $f(x)$, while satisfying all of the constraints (e.g., within a tolerance). In an embodiment, at least some of the constraints may be probabilistic constraints, as opposed to hard constraints. In addition, at least some of the constraints may restrict parameters associated with flexible loads 350 (e.g., parameters associated with electric vehicles).

Objective function $f(x)$ for the virtual site model may be constructed in any suitable manner. For example, feature engineering or other techniques may be used to evaluate potential parameters (variables, constraints or boundary conditions, weights, etc.), and select the most influential parameters for the optimization model. A user may routinely interact with optimizer 410 (e.g., via a graphical user interface generated by software 112), for example, to revise objective function $f(x)$, such as changing one or more parameters in objective function $f(x)$. A machine-learning algorithm may learn from these interactions, for example, to tune parameters or defaults in objective function $f(x)$ based on these routine user interactions.

Objective function $f(x)$ may comprise mixed-integer programming, linear programming, quadratic programming, mixed-integer linear programming (MILP), mixed-integer quadratic programming (MIQP), and/or the like. In general, the use of linear programming may improve computational speed and scalability of the optimization model, which can be especially advantageous when objective function $f(x)$ comprises a large number of variables or other parameters. There are numerous commercial and open-source modeling languages available to define objective function $f(x)$.

Objective function $f(x)$ may be trained in any known manner. For example, objective function $f(x)$ may be trained using supervised machine learning. In this case, a training dataset of ($X$, $Y$), in which $X$ represents a set of historical values for the variable(s) and $Y$ represents ground-truth target values for those historical values for the variable(s), may be used. In this case, the training may be expressed as:

$$\min(Y - f(X))$$

wherein $f(X)$ (e.g., the weights in $f(X)$) is updated to minimize the error between the ground-truth target values $Y$ and the corresponding target values output by $f(X)$. Alternatively, objective function $f(x)$ may be trained in other manners using historical data.

In an embodiment, the optimization model may comprise a plurality of objective functions:

$$\min_{x} \left( f(x) + \sum_{1}^{K} g_k(x) \right)$$

subject to zero, one, or a plurality of constraints. Each $g(x)$ represents a secondary objective function, in addition to the primary objective function $f(x)$. There may be $K \geq 1$ secondary objective functions $g(x)$. Each secondary objective function $g(x)$ may output a target value, based on x, in the same unit of measure (e.g., monetary cost) as the target value output by primary objective function $f(x)$. It should be understood that, when the optimization model is solved, the total target value, as the sum of the target value output by primary objective function $f(x)$ and each secondary objective function $g(x)$, is minimized. A secondary objective function $g(x)$ may be a penalty function that penalizes certain attributes of values x, to thereby bias the optimization model away from solutions with values x that have those attributes.

While the optimization model has been expressed herein as a minimization problem, it should be understood that the optimization model could instead be expressed herein as a maximization problem:

$$max_x \left( f(x) + \sum_1^K g_k(x) \right)$$

subject to zero, one, or a plurality of constraints. However, in order to simplify the description, it will generally be assumed herein that the optimization model is cast as a minimization problem. A person of skill in the art will understand how to convert between a minimization and maximization problem, and which problem may be more appropriate in a given circumstance.

In subprocess 530, the optimization model is solved to determine values for the one or more variables that optimize the target value. In other words, the optimization model is evaluated to determine values $x$ that optimize (e.g., minimizes) the target value output by the optimization model. Solving the optimization model may comprise iteratively executing the optimization model using a different set of values $x$ in each iteration until the target value converges. After each iteration, values x for the next iteration may be determined using any known technique (e.g., gradient descent). The target value may be determined to converge when it is within a tolerance from a specific value, when the rate of improvement to the target value over prior iterations satisfies a threshold (e.g., the rate of decrease in the target value falls below a threshold in a minimization problem), and/or when one or more other criteria are satisfied. Once the target value has converged, values x that produced the final target value may be output as the solution to the optimization model. These values x may represent an operating configuration for the virtual site model, which may comprise individual operating configurations for each of the plurality of power infrastructure sites 140 whose model was included in the virtual site model.

The optimization model may be a stochastic optimization model that is robust to uncertainties. The optimization model may be solved in subprocess 530 using any suitable technique. Such techniques include, without limitation, stochastic multi-stage optimization, chance-constrained optimization, Markowitz mean-variance optimization, and/or the like. There are numerous commercial and open-source solvers available to solve the optimization model in subprocess 530.

In an embodiment, a plurality of optimization models, each comprising a different primary objective function $f(x)$, could be solved. Each primary objective function $f(x)$ may represent a different scenario. Such an embodiment may be used to evaluate a plurality of different "what-if" scenarios. Alternatively or additionally, each primary objective function $f(x)$ may represent a different objective. A final solution may be determined from the solutions output by the plurality of optimization models by selecting one of the solutions, combining the solutions in any suitable manner, or the like.

In subprocess 540, control of the plurality of power infrastructure sites 140, represented in the virtual site model, may be initiated based on the solution to the optimization model. The control may comprise configuring one or more physical components in the plurality of power infrastructure sites 140 based on the determined values $x$, representing an operating configuration. These physical components may comprise physical infrastructure assets, such as battery energy storage system(s) 320, power generator(s) 330, charging station(s) 340, charger(s) 342, flexible load(s) 350, auxiliary load(s), and/or the like.

As mentioned above, the solution to the optimization model comprises the values for the one or more variables (i.e., $x$) that optimized the target value in subprocess 530. Values x may represent operating configurations for the plurality of power infrastructure sites 140. For example, values $x$ may comprise, for each flexible load 350, a future charging pattern (e.g., power flow rate, charging time period, etc.) that charges flexible load 350 to a target state of charge by a scheduled time. In the case that flexible load 350 is an electric vehicle, the scheduled time may be a departure time, and the target state of charge may be a state of charge required for the electric vehicle to complete its scheduled route. The charging may also include or otherwise account for preconditioning of the electric vehicle (e.g., cooling an electric vehicle before its departure, pre-conditioning the battery of an electric vehicle, etc.), as well as charging the battery of the electric vehicle. However, pre-conditioning may be a flexible operating state that can be terminated or foregone, when necessary to charge an electric vehicle by its scheduled departure time, or when optimizer 410 determines that the power can be better used elsewhere. If the plurality of power infrastructure sites 140 are operated by multiple operators, the solution to the optimization model may involve a plurality of different multiple services and stakeholders.

Subprocess 540 may comprise optimizer 410 generating and transmitting control information to one or more control systems 142. Each control system 142 may then control physical component(s) in its respective power infrastructure site 140. Alternatively, optimizer 410 could control the physical component(s) directly (i.e., without an intervening control system). In either case, the control may comprise setting a setpoint of a physical component, actuating a switch, turning a physical component on or off or otherwise changing a physical or operating state of a physical component, and/or the like. A setpoint of a physical component may comprise a value of voltage, current, output power, input power, power flow rate, state of charge, temperature, or the like. For example, the control may comprise controlling the setpoint(s) (e.g., output power) of non-intermittent distributed energy resources. It should be understood that, while intermittent distributed energy resources (e.g., solar or wind power generators or other generators that depend on weather) could be controlled in a similar manner, intermittent distributed energy resources can typically only be controlled to curtail output power to less than their potential output power, which essentially wastes energy.

In an embodiment, process 500 may be performed periodically to determine values x, representing the operating configuration of the plurality of power infrastructure sites 140, in a sliding time window, and initiate control of the plurality of power infrastructure sites 140 to conform to those operating configurations within the optimization period represented by the sliding time window. The sliding time window may slide according to a time step (i.e., an expiration of a time interval), and process 500 may be executed for the optimization period, currently represented by the sliding time window, after each time step. For example, the time step could be one minute, five minutes, ten minutes, fifteen minutes, thirty minutes, one hour, one day, or any other time interval. The sliding time window may start with the current time and end in the future, or may start in the future and end further in the future. In the former case, process 500 is executed at the start of each optimization period, whereas, in the latter case, process 500 is executed in advance of each optimization period (e.g., one minute, five minutes, ten minutes, fifteen minutes, thirty minutes, one hour, one day, etc., in advance). The periodic execution of process 500 may be performed automatically after each time step (i.e., without user intervention) or semi-automatically (e.g., with user confirmation) after each time step. In either case, once execution of process 500 is initiated, each subprocess of process 500 may be executed automatically.

In an alternative or additional embodiment, process 500 may be executed in response to a triggering event, other than a time step. For example, process 500 may be executed in response to a user operation. In particular, a user may utilize one or more inputs of a graphical user interface, provided by software 112, to execute optimizer 410. In this case, the initiation of control in subprocess 540 may be performed automatically, semi-automatically, or manually. In the semi-automatic case, the graphical user interface may display the operating configuration, output by subprocess 530, to the user and request confirmation from the user prior to optimizer 410 executing subprocess 540. In the manual case, the graphical user interface may provide the operating configuration, output by subprocess 530, to a user, and the user may manually configure one or more of the plurality of power infrastructure sites 140.

### 6. Example Embodiments

Embodiments of optimizer 410 collect loosely coupled data to optimize operation of a plurality of power infrastructure sites 140 as a single virtual site model (e.g., a multi-tenant charging system-of-systems) across multiple criteria. In doing so, optimizer 410 can combine the schedules and service needs for flexible loads 350 managed across the plurality of power infrastructure sites 140, so that various operators (e.g., of EV fleets) can essentially share resources (e.g., battery energy storage systems 320, power generators 330, charging stations 340, etc.). This can increase utilization of infrastructure assets, including on-site stationary storage (e.g., 320), power generation (e.g., 330), and charging stations (e.g., 340), while providing robustness against disturbances (e.g., EV delays, faults, outages, etc.). The increased robustness, provided by optimizer 410, can reduce delays and service interruptions (e.g., of electric vehicles), providing stable, on-time service, which can increase trust and confidence of consumers (e.g., EV owners) in charging systems. In addition, the increased utilization of infrastructure assets (e.g., increased utilization of charging stations 340) can reduce the total cost of ownership of power infrastructure sites 140 (e.g., by delivering more energy for the same charger power).

The combined optimization across a plurality of power infrastructure sites 140 can also reduce costs of utilizing grid 310 for all stakeholders. In particular, these stakeholders can utilize the aggregated power demand as leverage for decreased energy prices. The aggregated power demand can be sold into an electricity market 150 (e.g., after a bidding process) and/or utilized for negotiating and/or purchasing ancillary services (e.g., demand response) from electricity market 150. The aggregated power demand may increase the likelihood that a particular ancillary service can be provided and/or provide the opportunity for new ancillary services to made available.

In addition, power from one or more power infrastructure sites 140 can be traded and/or sold on electricity market 150. In particular, power stored in battery energy storage system(s) 320, power generated by power generators 330, and/or power stored in flexible loads 350 may be supplied to grid 310. The operators of power infrastructure site(s) 140 and/or flexible loads 350 may be compensated (e.g., via electricity market interface 152) for the power supplied to grid 310. For example, if flexible loads 350 comprise a fleet of electric vehicles, a fleet operator could sell excess state of charge in the batteries of the electric vehicles to electricity market 350. In this case, a control system 142 may control charging stations 340 to discharge power from the batteries of flexible loads 350 into grid 310.

In an embodiment, two or more power infrastructure sites 140 may be electrically connected via a transmission network. In this case, optimizer 410 may produce an operating configuration that supplies power from one power infrastructure site 140 to another power infrastructure site 140 using available transmission capacity. For example, power stored in a battery energy storage system 320, produced by power generators 330, and/or stored in flexible loads 350 in one power infrastructure site 140 could be used to charge flexible loads 350 in another power infrastructure site 140 and/or be stored in a battery energy storage system 320 in another power infrastructure site 140. This enables optimizer 410 to mitigate disruptions (e.g., urgent or delayed flexible loads 350) in one power infrastructure site 140 using excess power available in another power infrastructure site 140.

Embodiment 1: A method comprising using at least one hardware processor to: aggregate models of a plurality of power infrastructure sites, which support flexible loads, into a virtual site model; generate an optimization model from the virtual site model, wherein the optimization model outputs a target value based on one or more variables and an input that comprises a schedule for the flexible loads in the plurality of power infrastructure sites; solve the optimization model to determine values for the one or more variables that optimize the target value; and initiate control of one or more physical components in the plurality of infrastructure sites based on the determined values for the one or more variables.

Embodiment 2: The method of Embodiment 1, wherein the plurality of power infrastructure sites comprises depots, wherein the flexible loads comprise electric vehicles, and wherein the one or more physical components comprise one or more charging stations configured to electrically connect to the electric vehicles to one or both of charge the electric vehicles or discharge the electric vehicles.

Embodiment 3: The method of Embodiment 1 or 2, wherein the determined values for the one or more variables associate each of the electric vehicles with one or both of a time period or power flow rate for charging or discharging at one of the one or more charging stations in one of the plurality of power infrastructure sites.

Embodiment 4: The method of any one of Embodiments 1 through 3, wherein the flexible loads comprise electric vehicles from a plurality of different fleets.

Embodiment 5: The method of any one of Embodiments 2 through 4, further comprising receiving vehicle information for the electric vehicles from at least one external system via at least one network, wherein the input to the optimization model is derived from at least the vehicle information.

Embodiment 6: The method of Embodiment 5, wherein the vehicle information comprises one or more of planned schedules for the electric vehicles, routes of the electric vehicles, arrival times of the electric vehicles at the plurality of power infrastructure sites, or states of charge of the electric vehicles.

Embodiment 7: The method of any one of Embodiments 1 through 6, wherein the target value includes at least an energy cost, and wherein optimizing the target value comprises minimizing the target value.

Embodiment 8: The method of any one of Embodiments 1 through 7, wherein initiating control of one or more physical components in the plurality of infrastructure sites comprises controlling setpoints of the one or more physical components according to the determined values for the one or more variables.

Embodiment 9: The method of Embodiment 8, wherein the one or more physical components comprise non-intermittent distributed energy resources.

Embodiment 10: The method of any one of Embodiments 1 through 9, wherein initiating control comprises communicating with a control system for at least one of the plurality of power infrastructure sites via at least one network.

Embodiment 11: The method of any one of Embodiments 1 through 10, wherein the optimization model is stochastic.

Embodiment 12: The method of Embodiment 11, wherein the optimization model comprises at least one objective function and one or more constraints.

Embodiment 13: The method of Embodiment 12, wherein the optimization model comprises a plurality of objective functions.

Embodiment 14: The method of either Embodiment 12 or 13, wherein the flexible loads comprise electric vehicles, and wherein the one or more constraints restrict parameters associated with the electric vehicles.

Embodiment 15: The method of any one of Embodiments 12 through 14, wherein the at least one objective function comprises one or both of mixed-integer programming or linear programming.

Embodiment 16: The method of any one of Embodiments 1 through 15, further comprising using the at least one hardware processor to: determine an energy demand based on the determined values for the one or more variables and the schedule for flexible loads; request the energy demand from an electricity market interface via at least one network; and receive a service commitment for the energy demand from the electricity market interface via the at least one network.

Embodiment 17: The method of Embodiment 16, further comprising receiving a price forecast from the electricity market forecast over the at least one network, wherein the target value is further based on the price forecast.

Embodiment 18: The method of any one of Embodiments 1 through 17, further comprising using the at least one hardware processor to: receive service pricing for one or more services from an electricity market interface via at least one network, wherein the input comprises the service pricing for at least one of the one or more services; determine to purchase the at least one service; request a service commitment for the at least one service from the electricity market interface via the at least one network; and receive the service commitment for the at least one service from the electricity market interface via the at least one network.

Embodiment 19: A system comprising: at least one hardware processor; and software configured to, when executed by the at least one hardware processor, perform the method of any one of Embodiments 1 through 18.

Embodiment 20: A non-transitory computer-readable medium having instructions stored thereon, wherein the instructions, when executed by a processor, cause the processor to perform the method of any one of Embodiments 1 through 18.

The above description of the disclosed embodiments is provided to enable any person skilled in the art to make or use the invention. Various modifications to these embodiments will be readily apparent to those skilled in the art, and the general principles described herein can be applied to other embodiments without departing from the spirit or scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly not limited.

Combinations, described herein, such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, and any such combination may contain one or more members of its constituents A, B, and/or C. For example, a combination of A and B may comprise one A and multiple B's, multiple A's and one B, or multiple A's and multiple B's.

## Claims

1.   A method comprising using at least one hardware processor to:

   aggregate models of a plurality of power infrastructure sites, which support flexible loads, into a virtual site model;
   generate an optimization model from the virtual site model, wherein the optimization model outputs a target value based on one or more variables and an input that comprises a schedule for the flexible loads in the plurality of power infrastructure sites;
   solve the optimization model to determine values for the one or more variables that optimize the target value; and
   initiate control of one or more physical components in the plurality of infrastructure sites based on the determined values for the one or more variables.

2.   The method of Claim 1, wherein the plurality of power infrastructure sites comprises depots, wherein the flexible loads comprise electric vehicles, and wherein the one or more physical components comprise one or more charging stations configured to electrically connect to the electric vehicles to one or both of charge the electric vehicles or discharge the electric vehicles.

3.   The method of Claim 2, wherein the determined values for the one or more variables associate each of the electric vehicles with one or both of a time period or power flow rate for charging or discharging at one of the one or more charging stations in one of the plurality of power infrastructure sites.

4.   The method of Claim 2, wherein the flexible loads comprise electric vehicles from a plurality of different fleets.

5.   The method of Claim 2, further comprising receiving vehicle information for the electric vehicles from at least one external system via at least one network, wherein the input to the optimization model is derived from at least the vehicle information.

6.   The method of Claim 5, wherein the vehicle information comprises one or more of planned schedules for the electric vehicles, routes of the electric vehicles, arrival times of the electric vehicles at the plurality of power infrastructure sites, or states of charge of the electric vehicles.

7.   The method of Claim 1, wherein the target value includes at least an energy cost, and wherein optimizing the target value comprises minimizing the target value.

8.   The method of Claim 1, wherein initiating control of one or more physical components in the plurality of infrastructure sites comprises controlling setpoints of the one or more physical components according to the determined values for the one or more variables.

9.   The method of Claim 8, wherein the one or more physical components comprise non-intermittent distributed energy resources.

10.   The method of Claim 1, wherein initiating control comprises communicating with a control system for at least one of the plurality of power infrastructure sites via at least one network.

11.   The method of Claim 1, wherein the optimization model is stochastic.

12.   The method of Claim 11, wherein the optimization model comprises at least one objective function and one or more constraints.

13.   The method of Claim 12, wherein the optimization model comprises a plurality of objective functions.

14. The method of Claim 12, wherein the flexible loads comprise electric vehicles, and wherein the one or more constraints restrict parameters associated with the electric vehicles.

15. The method of Claim 12, wherein the at least one objective function comprises one or both of mixed-integer programming or linear programming.

16. The method of Claim 1, further comprising using the at least one hardware processor to:

   determine an energy demand based on the determined values for the one or more variables and the schedule for flexible loads;
   request the energy demand from an electricity market interface via at least one network; and
   receive a service commitment for the energy demand from the electricity market interface via the at least one network.

17. The method of Claim 16, further comprising receiving a price forecast from the electricity market forecast over the at least one network, wherein the target value is further based on the price forecast.

18. The method of Claim 1, further comprising using the at least one hardware processor to:

   receive service pricing for one or more services from an electricity market interface via at least one network, wherein the input comprises the service pricing for at least one of the one or more services;
   determine to purchase the at least one service;
   request a service commitment for the at least one service from the electricity market interface via the at least one network; and
   receive the service commitment for the at least one service from the electricity market interface via the at least one network.

19. A system comprising:

   at least one hardware processor; and
   software configured to, when executed by the at least one hardware processor,

      aggregate models of a plurality of power infrastructure sites, which support flexible loads, into a virtual site model,
      generate an optimization model from the virtual site model, wherein the optimization model outputs a target value based on one or more variables and an input that comprises a schedule for the flexible loads in the plurality of power infrastructure sites,
solve the optimization model to determine values for the one or more variables that optimize the target value, and
initiate control of one or more physical components in the plurality of infrastructure sites based on the determined values for the one or more variables.

20. A non-transitory computer-readable medium having instructions stored thereon, wherein the instructions, when executed by a processor, cause the processor to:

   aggregate models of a plurality of power infrastructure sites, which support flexible loads, into a virtual site model;
   generate an optimization model from the virtual site model, wherein the optimization model outputs a target value based on one or more variables and an input that comprises a schedule for the flexible loads in the plurality of power infrastructure sites;
   solve the optimization model to determine values for the one or more variables that optimize the target value; and
   initiate control of one or more physical components in the plurality of infrastructure sites based on the determined values for the one or more variables.

EMS
110

Software
112

Database(s)
114

Power Infrastructure Site
140

142

Network(s)
120

Electricity Market
150

152

User System
130

Application
132

Local Database
134

FIG. 1

**200**

**FIG. 2**

**FIG. 3**

FIG. 4

<u>500</u>

```
                    ┌──────────┐
                    │  START   │
                    └────┬─────┘
                         │
                         ▼
     ┌───────────────────────────────────────┐
     │  Aggregate models for plurality of     │
     │  power infrastructure sites into       │
     │  virtual site model                    │
     │                  510                   │
     └───────────────────┬───────────────────┘
                         │
                         ▼
     ┌───────────────────────────────────────┐
     │  Generate optimization model from      │
     │  virtual site model                    │
     │                  520                   │
     └───────────────────┬───────────────────┘
                         │
                         ▼
     ┌───────────────────────────────────────┐
     │       Solve optimization model          │
     │                  530                   │
     └───────────────────┬───────────────────┘
                         │
                         ▼
     ┌───────────────────────────────────────┐
     │  Initiate control of plurality of       │
     │  infrastructure sites based on solution │
     │  to optimization model                  │
     │                  540                   │
     └───────────────────┬───────────────────┘
                         │
                         ▼
                    ┌──────────┐
                    │   END    │
                    └──────────┘
```

**FIG. 5**

Europäisches Patentamt
European Patent Office
Office européen des brevets

**Application Number**

**EP 22 21 4128**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MOGHADDASS RAMIN ET AL: "Smart Control of Fleets of Electric Vehicles in Smart and Connected Communities", IEEE TRANSACTIONS ON SMART GRID, IEEE, USA, vol. 10, no. 6, 1 November 2019 (2019-11-01), pages 6883-6897, XP011751264, ISSN: 1949-3053, DOI: 10.1109/TSG.2019.2913587 [retrieved on 2019-10-18] | 1-8,10, 12-14, 19,20 | INV. B60L53/64 B60L53/67 H02J3/00 H02J7/00 ADD. B60L53/65 H02J3/14 H02J3/32 G06Q30/0601 G06Q50/06 |
| Y | * abstract * * Sections III, III.A, III.B, III.C, III.D, III.E; page 6885 – page 6887 * * Section IV.A; page 6888 * * Section V; page 6889 * * Section VI.A; page 6892 * ----- -/-- | 9,11, 15-18 | |

| | | | TECHNICAL FIELDS SEARCHED (IPC) |
|---|---|---|---|
| | | | H02J G06Q B60L |

The present search report has been drawn up for all claims

| Place of search | Date of completion of the search | Examiner |
|---|---|---|
| Munich | 29 August 2023 | Sulic, Tomislav |

EPO FORM 1503 03.82 (P04C01)

**EUROPEAN SEARCH REPORT**

Application Number

EP 22 21 4128

## DOCUMENTS CONSIDERED TO BE RELEVANT

| Category | Citation of document with indication, where appropriate, of relevant passages | Relevant to claim |
|---|---|---|
| Y | DUAN XIAOYU ET AL: "Bidding Strategies in Energy and Reserve Markets for an Aggregator of Multiple EV Fast Charging Stations With Battery Storage", IEEE TRANSACTIONS ON INTELLIGENT TRANSPORTATION SYSTEMS, IEEE, PISCATAWAY, NJ, USA, vol. 22, no. 1, 9 September 2020 (2020-09-09), pages 471-482, XP011827204, ISSN: 1524-9050, DOI: 10.1109/TITS.2020.3019608 [retrieved on 2020-12-24] * abstract * * page 472, right column, second paragraph * * Section II; page 473; figure 1 * | 9,11, 15-18 |
| A | WO 2021/055843 A1 (AMPLY POWER INC [US]) 25 March 2021 (2021-03-25) * the whole document * | 1-20 |

**CLASSIFICATION OF THE APPLICATION (IPC)**

**TECHNICAL FIELDS SEARCHED (IPC)**

The present search report has been drawn up for all claims

| Place of search | Date of completion of the search | Examiner |
|---|---|---|
| Munich | 29 August 2023 | Sulic, Tomislav |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 4128

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2023

| Patent document cited in search report | | Publication date | Patent family member(s) | | Publication date |
|---|---|---|---|---|---|
| WO 2021055843 | A1 | 25-03-2021 | EP | 4031405 A1 | 27-07-2022 |
| | | | US | 2021086647 A1 | 25-03-2021 |
| | | | WO | 2021055843 A1 | 25-03-2021 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2760696 A
- US 10946763 B
- US 20210221247 A